# EUROPÄISCHE PATENTANMELDUNG

(11) **EP 0 899 965 A2**
(43) Veröffentlichungstag der Anmeldung: **03.03.1999**
(21) Anmeldenummer: 98114941.2
(22) Anmeldetag: 07.08.1998
(51) Int. Cl.: H04N 7/64

(54) **Verfahren und Vorrichtung zur Fehlerlokalisierung in einer Bilddatenübertragung**

(30) Priorität: 29.08.1997 DE 19737872
(71) Anmelder: SIEMENS AKTIENGESELLSCHAFT, 80333 München (DE)
(72) Erfinder: Panis, Stathis, 3090 Limassol (CY); Jakob, Thorsten, 81476 München (DE)

(57) **Zusammenfassung**

Es werden alle transparenten Bildpunkte eines Bildes ermittelt (101) und für jeden transparenten Bildpunkt, der in einem Bildblock liegt, in dem kein Bildpunkt dem Bildobjekt zugeordnet ist, wird eine Nummer gespeichert, die dem Makroblock zugeordnet ist, in dem der Bildblock liegt (102, 103). Ein Gebiet, in dem der Übertragungsfehler sich befindet, ist gegeben durch die Bitposition des gespeicherten Makroblocks mit niedrigster Nummer (Schritt 105) und einer Bitposition am Ende des Makroblocks.

## Beschreibung

Die Erfindung betrifft die Fehlerlokalisierung eines Übertragungsfehlers, der bei der Decodierung eines codierten Bildes erkannt wurde.

Neue, objektbasierte Bildcodierungsverfahren eröffnen neue Möglichkeiten in der Telekommunikation. Es wird möglich, einzelne Bildobjekte in einem digitalisierten Bild separat zu manipulieren und auf sie zuzugreifen. Somit wird die Interaktion eines Betrachters mit einem ihm dargestellten Bild bzw. einer ihm dargestellten Folge von Bildern möglich.

Der Videokommunikationsstandard MPEG4 nutzt die neuen Möglichkeiten in seiner Encoder- bzw. Decoderstruktur.

Die Gesamtheit der Strukturdefinition der Bildcodiereinheit und der Bilddecodiereinheit wird im Rahmen des MPEG4 als Verification Model (VM) bezeichnet (vgl. [1]).

Es werden Bilder mit einer Kamera aufgenommen und digitalisiert, so daß sie mit digitaler Bildverarbeitung verarbeitbar sind.

Die Bilder weisen Bildpunkte auf, die gemäß dem Verfahren aus [1] in mindestens ein Bildobjekt beliebiger Form innerhalb des Bildes gruppiert werden. Außerdem werden die Bildpunkte auch in Bildblöcke gruppiert (üblicherweise 8x8 oder 16x16 Bildpunkte pro Bildblock). Mehrere Bildblöcke werden zu einem Makroblock gruppiert (üblicherweise 4 Bildblöcke pro Makroblock).

Jedes Bildobjekt (Video Object, VO) des Bildes wird separat codiert und alle Bildobjekte des Bildes werden in einem Multiplexer zu einem Bilddatenstrom zusammengeführt.

Bei der Decodierung wird der Bilddatenstrom in die einzelnen Bildobjekte unter Verwendung eines Demultiplexers aufgeteilt. Die Bildobjekte werden einzeln decodiert und zu einem rekonstruierten Bild zusammengesetzt.

Jedem Bildpunkt ist ein Helligkeitswert und/oder ein Farbwert sowie möglicherweise mindestens ein Formparameter, mit dem die Form des Bildobjekts innerhalb des Bildes angegeben wird.

Zur Codierung wird bei dem Verfahren aus [1] ein blockbasiertes Hybrid-DCT-Codierungsverfahren (Diskrete Cosinus Transformation), z.B. das Verfahren gemäß dem H.263-Standard eingesetzt.

Bei der Übertragung des Bilddatenstroms beispielsweise über ein Mobilfunknetz treten Übertragungsfehler auf, deren Auftretenswahrscheinlichkeit mit sich verschlechternden Empfangsbedingungen erhöht.

Übertragungsfehler können bei der Decodierung dazu führen, daß das Bildobjekt, in dem der Übertragungsfehler aufgetreten ist, nicht mehr korrekt oder gar nicht mehr decodiert werden kann.

Verschiedene Verfahren zur Fehlererkennung sind in [2] beschrieben, insbesondere Fehlererkennungsverfahren unter Verwendung zusätzlicher Redundanz zu den übertragenen Nutzdaten, die die Redundanz gemäß sogenannter Reed-Solomon-Codes oder Bose-Chaodhory-Hocquenghem-Codes verwenden.

Ein Nachteil dieser Verfahren ist darin zu sehen, daß bei der Decodierung zwar Übertagungsfehler erkannt werden, diese jedoch nicht lokalisiert werden können. Dies bedeutet, daß ein Fehler auftreten kann, der erst bei der Decodierung einer Vielzahl nachfolgender Makroblöcke erkannt wird.

Somit liegt der Erfindung das Problem zugrunde, bei der Decodierung erkannte Übertragungsfehler innerhalb des Bildobjekts zu lokalisieren.

Das Problem wird durch das Verfahren gemäß Patentanspruch 1 sowie durch die Vorrichtung gemäß Patentanspruch 8 gelöst.

Bei dem Verfahren zur Fehlerlokalisierung eines Übertragungsfehlers, der bei der Decodierung eines codierten, eine beliebige Anzahl von Bits aufweisenden Bildes erkannt wurde, das mindestens ein Bildobjekt aufweist, wobei Bildpunkte des Bildes in Bildblöcke gruppiert sind und die Bildblöcke in Makroblöcke gruppiert sind, denen eine aufsteigende Numerierung entsprechend ihrer örtlichen Position innerhalb des Bildes zugeordnet ist, werden folgende Schritte durchgeführt: - für jeden Bildpunkt, der nicht dem Bildobjekt zugeordnet ist und der in einem Bildblock liegt, in dem kein Bildpunkt dem Bildobjekt zugeordnet ist, wird die dem Makroblock zugeordnete Nummer gespeichert, in dem der Bildblock liegt,
- der Makroblock mit der niedrigsten Nummer wird ermittelt,
- die ermittelte Fehlerlokalisierung ist durch ein Gebiet gegeben ab einem Bit, mit dem der Makroblock in dem codierten Bild beginnt.

Die Vorrichtung zur Fehlerlokalisierung weist eine Prozessoreinheit auf, die derart eingerichtet ist, daß
- für jeden Bildpunkt, der nicht dem Bildobjekt zugeordnet ist und der in einem Bildblock liegt, in dem kein Bildpunkt dem Bildobjekt zugeordnet ist, die dem Makroblock zugeordnete Nummer gespeichert wird, in dem der Bildblock liegt,
- der Makroblock mit der niedrigsten Nummer ermittelt wird,
- die ermittelte Fehlerlokalisierung durch ein Gebiet gegeben ist ab einem Bit, mit dem der Makroblock in dem codierten Bild beginnt.

Durch die Erfindung wird es möglich, einen erkannten Fehler innerhalb eines Bilddatenstroms zu lokalisieren. Auf diese Weise wird eine vereinfachte Fehlerkorrektur ermöglicht.

Vorteilhafte Weiterbildungen der Erfindung ergeben sich aus den abhängigen Ansprüchen.

Es ist in einer Weiterbildung vorteilhaft, zusätzlich für Bildpunkte, die in einem vorgebbaren Randbereich eines Bildblocks liegen, Differenzwerte der Luminanzwerte und/oder der Farbwerte der jeweiligen Bildpunkte mit Luminanzwerten und/oder Farbwerten von Bildpunkten angrenzender Bildblöcke zu bilden, und dann die Nummer des dem Bildblock zugeordneten Makroblocks zu speichern, wenn mindestens ein Differenzwert über einem vorgebbaren Schwellenwert liegt.

Ferner ist es in einer Weiterbildung vorteilhaft, in den Randbereichen der Bildblöcke Differenzwerte für Formparameter der einzelnen Bildpunkte zu bilden und die Nummer des jeweiligen Makroblocks des Bildblocks zu speichern, wenn mindestens ein Differenzwert größer ist als ein vorgebbarer Schwellenwert.

Jedes der oben genannten Kriterien führt zu einer weiteren Verbesserung der Lokalisierung des Übertragungsfehlers.

Vorteilhafterweise kann aufbauend auf dem Verfahren eine sehr einfache Fehlerkorrektur durchgeführt werden, wobei in einem interaktiven Verfahren jeweils ein decodierter Bitwert eines Bildpunktes in dem Gebiet invertiert wird und das Gebiet mit dem invertierten Bitwert neu decodiert wird. Dies geschieht solange, bis eine korrekte Decodierung durchgeführt wird.

Durch diese Weiterbildung wird eine gegenüber bisherigen Verfahren sehr einfache Fehlerkorrektur realisierbar, da eine Fehlerlokalisierung mit bisherigen Verfahren zur Fehlererkennung nicht möglich war.

Ein Ausführungsbeispiel der Erfindung ist in den Figuren dargestellt und wird im weiteren näher erläutert.

Es zeigen
- Figuren 1a bis 1c: Ablaufdiagramme, in denen die Verfahrensschritte des Ausführungsbeispieles dargestellt sind;
- Figuren 2a und 2b: Skizzen der Bildcodiereinheit (Fig. 2a) und der Bilddecodiereinheit (Fig. 2b) gemäß dem Verification Model (VM) von MPEG4;
- Figuren 3a und 3b: Skizzen der Datenformate des Bilddatenstroms (Fig. 3a) und der Struktur jedes Bildobjekts innerhalb des Bilddatenstroms (Fig. 3b) gemäß dem Verification-Model von MPEG4;
- Figur 4: eine Skizze eines Bildes mit einem Bildobjekt und Bildblöcken und Makroblöcken;
- Figur 5: eine Skizze des Datenformats eines Makroblocks;
- Figur 6: ein Ablaufdiagramm, in dem die einzelnen Verfahrensschritte des Fehlerkorrekturverfahrens gemäß dem Ausführungsbeispiel dargestellt sind.

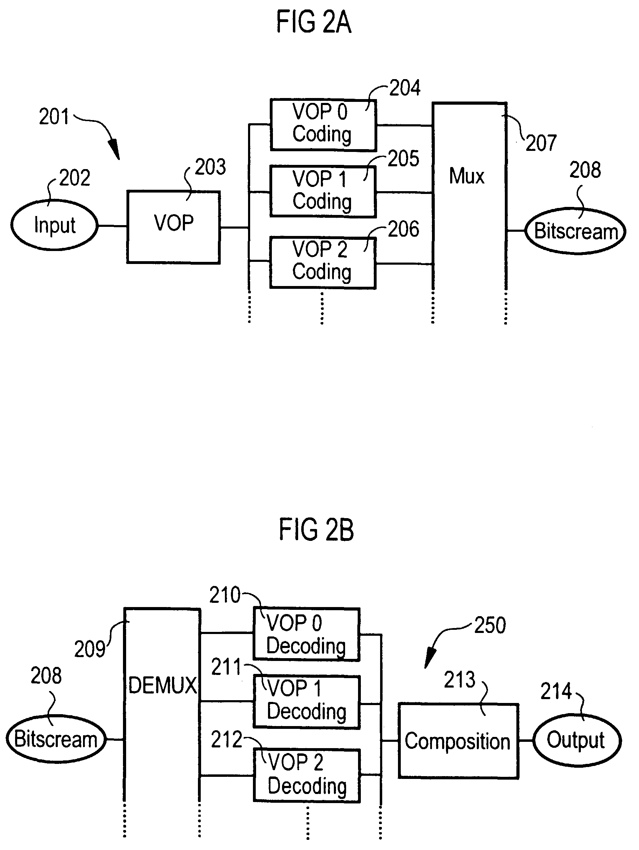

In dem MPEG4-Videokommunikationsstandard ist ein sogenanntes Verification-Model (VM) definiert, mit dem die Architektur einer Bildcodiereinheit 201 (vgl. Fig. 2a) sowie einer Bilddecodiereinheit 250 (Fig. 2b) definiert ist.

Von einer Kamera aufgenommene Bilder einer Szene werden digitalisiert.

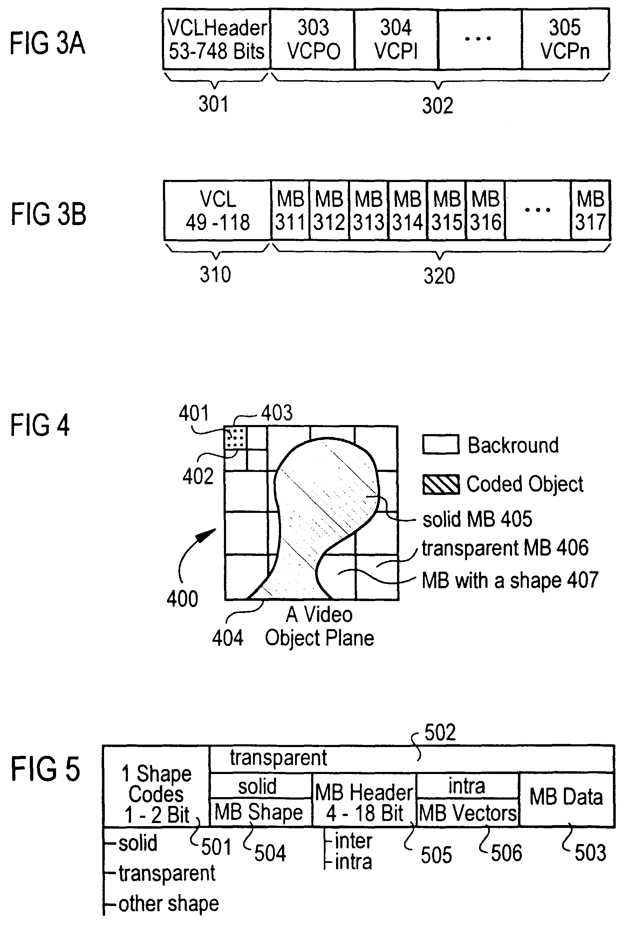

Somit weist ein Bild 400 Bildpunkte 401 auf. Die Bildpunkte sind in Bildblöcke 402 (vgl. Figur 4) gruppiert, wobei jeweils ein Bildblock 402 jeweils 8x8 Bildpunkte 401 enthält.

Vier Bildböcke 402 werden zu jeweils einen Makroblock 403 gruppiert.

Ferner ist in dem Bild 400 jeweils mindestens ein Bildobjekt 404 enthalten.

Unter einem Bildobjekt 404 ist ein Element des Bildes 400 zu verstehen, das eigenständig von einem Benutzer manipuliert bzw. auf das eigenständig zugegriffen werden kann. Ein Bildobjekt 404 ist in Figur 4 in Form eines Kopfes einer Person dargestellt.

Bildpunkte 401 des Bildes 400 sind entweder Bildpunkte, die sich innerhalb des Bildobjektes 404 befinden, oder Bildpunkte, die nicht dem Bildobjekt 404 zugeordnet sind.

In einem Bild 400 mit einem Bildobjekt 404 sind drei Arten von Makroblöcken 403 zu unterscheiden:
- Makroblöcke, die vollständig in dem Bildobjekt 404 enthalten sind, werden im weiteren als ausgefüllte Makroblöcke 405 bezeichnet;
- Makroblöcke, bei denen kein Bildpunkt des jeweiligen Makroblocks zu dem Bildobjekt 404 gehören, werden als transparente Makroblöcke 406 bezeichnet;
- Makroblöcke, bei denen mindestens ein Bildpunkt des Makroblocks dem Bildobjekt 404 zugeordnet ist, werden im weiteren als teilweise ausgefüllte Makroblöcke 407 bezeichnet.

Gemäß eines im weiteren detaillierter beschriebenen Datenformats werden Bilder 202 auf die in den Bildern 202 enthaltenen Bildobjekte 404 hin untersucht, d.h. die Bildobjekte werden ermittelt (203).

Die Bildobjekte 404 jeweils eines Bildes 202 werden im weiteren auch als Video Object Planes (VOPs) bezeichnet.

Die in den Bildern jeweils enthaltenen Bildobjekte 204, 205, 206, ..., werden separat gemäß dem blockbasierten Bildcodierungsverfahrens gemäß dem H.263-Standard codiert und in einem Multiplexer 207 zu einem Bilddatenstrom 208 zusammengeführt (gemultiplext).

In der Bilddecodiereinheit 250 wird der Bilddatenstrom 208 in einem Demultiplexer 209 in die einzelnen Bildobjekte aufgeteilt, die separat decodiert werden 210, 211, 212.

Die decodierten Bildobjekte 210, 211, 212 werden in einer Einrichtung 213 zur Rekonstruktion eines Bildes zu dem Bild 202 zusammengeführt, d.h. rekonstruiert. Das rekonstruierte Bild 214 wird dem Betrachter ausgegeben.

Der Bilddatenstrom 208 weist gemäß MPEG 4 folgende Struktur auf (vgl. Fig. 3a).

Es ist eine Header-Information 301 sowie eine Nutzdateninformation 302 vorgesehen.

In der Header-Information 301 ist Steuerinformation für die Übertragung des Bilddatenstroms 208 enthalten. In der Nutzdateninformation 302 sind die einzelnen, codierten Bildobjekte 303, 304, 305 enthalten.

Jedes Bildobjekt 303, 304, 305 ist gemäß folgender Struktur codiert (vgl. Fig. 3b).

Es ist eine für das jeweilige Bildobjekt 303, 304, 305 spezifische Header-Information 310 vorgesehen. Ferner sind in dem Teil des Bilddatenstroms 208, der das jeweilige Bildobjekt beschreibt, Datenelemente 320 enthalten, die die einzelnen Makroblöcke 311, 312, 313, 314, 315, 316, 317 des Bildobjekts 303, 304, 305 enthalten.

Die Makroblöcke 311, 312, ...., 317 innerhalb eines Bildobjektes werden eindeutig unter Verwendung aufsteigender Nummern gekennzeichnet. Die Numerierung erfolgt abhängig von der örtlichen Position des Makroblocks innerhalb des Teil des Bilddatenstroms 208, der sich auf das jeweilige Bildobjekt bezieht.

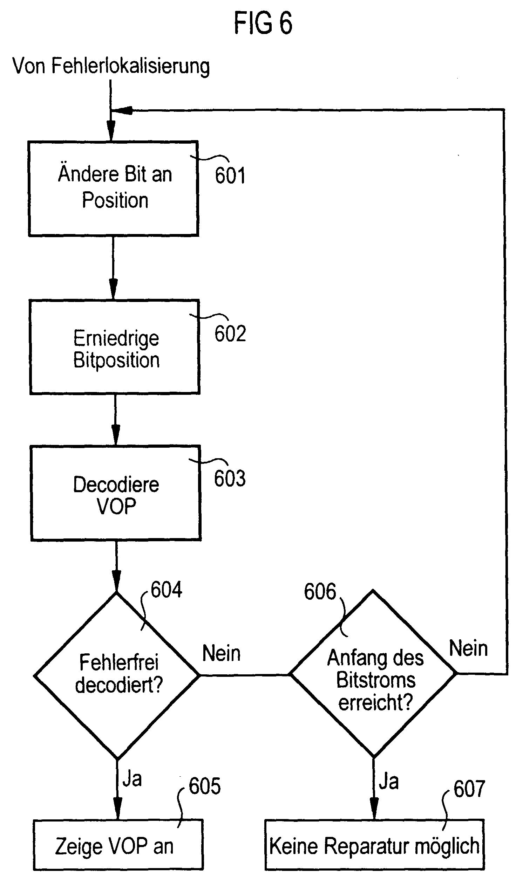

Figur 5 zeigt den Aufbau eines Makroblocks 311, 312, 313, 314, 315, 316, 317 je nach Art des jeweiligen Makroblocks.

Ein Makroblock 311, 312, 313, 314, 315, 316, 317 enthält unabhängig von der Art des Makroblocks eine Information 501, die angibt, um welche Art von Makroblock es sich im weiteren handelt.

Handelt es sich bei dem Makroblock um einen Makroblock der gleichen Art wie der zeitlich direkt vorangegangene Makroblock innerhalb des Bilddatenstroms 208, so wird dies in der Information 501, die dann lediglich ein Bit aufweist, angegeben.

Handelt es sich bei dem Makroblock um einen transparenten Makroblock 406, so ist in dem Makroblock keine weitere Bildinformation mehr enthalten, was in Fig.5 durch eine durchgehende Leerzeile 502 angedeutet ist.

Handelt es sich bei dem Makroblock um einen ausgefüllten Makroblock 405, so ist in jedem Makroblock zusätzlich Helligkeitsinformation und/oder Farbinformation, die den Bildpunkten 401 der jeweiligen Bildblöcke des Makroblocks zugeordnet sind, angegeben 503.

Handelt es sich um einen teilweise ausgefüllten Makroblock 407, d.h. um einen Makroblock, in dem Formparameter den Bildpunkten zugeordnet sind, die die Form des Teils des Bildobjekts 404 beschreiben, der sich in dem Makroblock befindet, so ist diese Forminformation der Formparameter in einem eigenen Feld 504 angegeben. Ferner ist ein Makroblockkopffeld 505 vorgesehen, in dem für den Fall einer Inter-Bildcodierung auch der/die Bewegungsvektor/Bewegungsvektoren 506 angegeben ist/sind, der/die dem Makroblock zugeordnet sind/ist.

Bei der Decodierung der Bildobjekte 210, 211, 212 eines Bildes 400 werden bei der Übertragung des Bilddatenstroms 208 aufgetretene Fehler als Übertragungsfehler von der Bilddecodiereinheit 250 erkannt.

Ein Übertragungsfehler kann beispielsweise durch folgende Situationen erkannt werden:
- Ein VLC-Codewort (Variable Length Coding) kann nicht auf die Codierungstabelle des VLC abgebildet werden;
- vorgegebene Werte werden zu undefinierten Werten decodiert;
- die Decodierung ergibt Werte, die für spezielle Vorgänge reserviert sind;
- es wird ein Wert decodiert für einen Bewegungsvektor, den ein Bewegungsvektor niemals annehmen kann;
- es werden mehr als 64 DCT-Koeffizienten decodiert;
- es wird ein semantischer Fehler erkannt, d.h. es tritt eine Kombination unterschiedlicher Codeworte auf, die gemäß den Codierungsvorschriften nicht auftreten dürften;
- die Kopfinformation oder die Synchroninformation, die ebenfalls in dem Datenformat vorgesehen ist, enthält Fehler.

Wenn einer von den oben beschriebenen Fehlern aufgetreten ist, würde dieser von der Bilddecodiereinheit erkannt werden. Bei weiteren möglichen Fehlern, z.B. in dem Fall, daß weniger DCT-Koeffizienten decodiert werden als encodiert waren, würde ein Synchronisationsverlust auftreten. Der Fehler würde später erkannt.
Die Fehlermeldung der Bilddecodiereinheit 250 enthält jedoch nicht die genaue Position, an der sich der Übertragungsfehler befindet.

Der eigentliche Übertragungsfehler kann weit vorher in dem Bildobjekt vorgekommen sein, der Fehler wirkt sich jedoch erst wesentlich später aus, so daß der Makroblock des Bildobjekts 404 nicht mehr korrekt decodiert werden kann.

Startpunkt für das im weiteren beschriebenen Verfahren, welches in der Einheit zur Bilddecodierung 250 (vgl. Fig. 2b) durchgeführt wird, ist das Bit, bei dem der Übertragungsfehler erkannt wurde.

Zur Durchführung des Verfahrens ist in der Bilddecodiereinheit 250 eine Prozessoreinheit (nicht dargestellt) vorgesehen, die die im weiteren beschriebenen Verfahrensschritte ausführen kann.

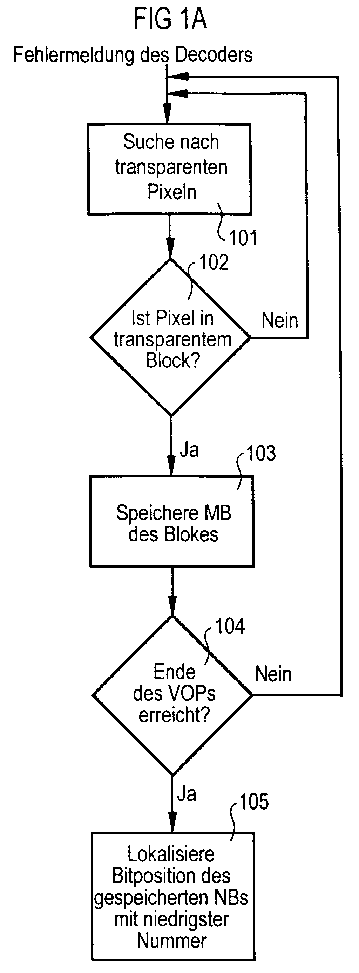

Ausgehend von der Fehlermeldung der Bilddecodiereinheit 250 werden alle Bildpunkte in dem Bild 400 ermittelt, die keinem Bildobjekt 404 in dem Bild 400 zugeordnet sind (Schritt 101 in Fig. 1a). Diese Bildpunkte werden im weiteren als transparente Bildpunkte bezeichnet.

In einem weiteren Schritt 102 wird für jeden transparenten Bildpunkt überprüft, ob der Bildpunkt in einem transparenten Bildblock liegt.

Unter einem transparenten Bildblock ist ein Bildblock zu verstehen, der nur Bildpunkte enthält, die keinem Bildobjekt zugeordnet sind.

Ist der transparente Bildpunkt nicht in einem transparenten Bildblock, so wird die Prüfung für einen weiteren transparenten Bildpunkt durchgeführt.

Liegt jedoch der Bildpunkt in einem transparenten Bildblock, so wird die Nummer des zugehörigen Makroblocks, in dem sich der transparente Bildblock befindet, gespeichert (Schritt 103).

Nach Speicherung des Makroblocks (Schritt 103) wird überprüft (Schritt 104) ob alle Makroblöcke des Bildobjekts 404 überprüft wurden.

Das Verfahren wird solange iterativ für alle transparenten Bildpunkte wiederholt.

Wurden alle transparenten Bildpunkte in dem Bildobjekt 404 berücksichtigt, so wird die Bitposition des gespeicherten Makroblocks mit niedrigster Nummer ermittelt (Schritt 105).

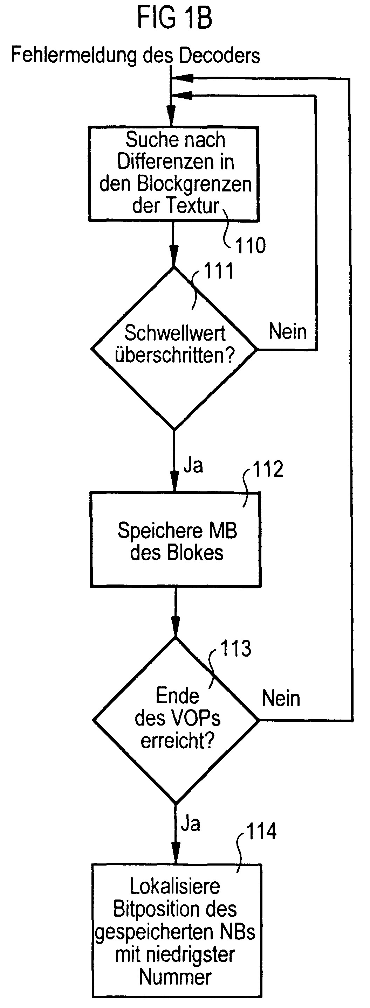

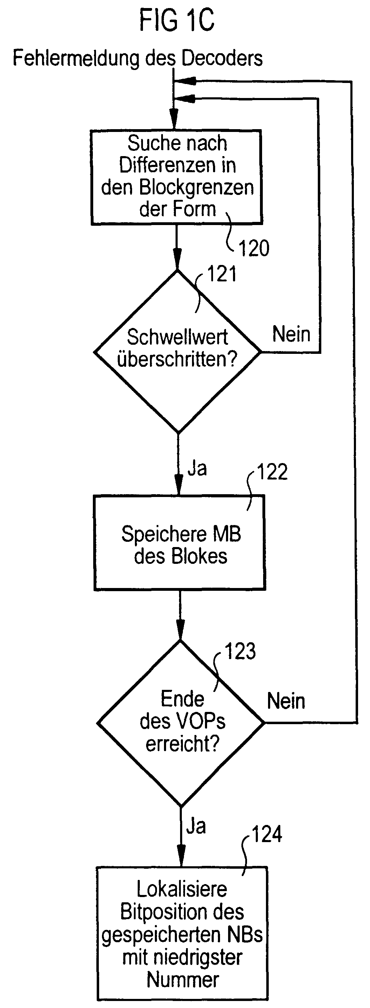

Zusätzlich werden auch Randbereiche der Bildblöcke als zusätzliche Kriterien betrachtet (vgl. Figuren 1b und 1c).

Es werden erste Differenzwerte zwischen Bildpunkten zugeordneten Helligkeitswerten, die in einem vorgebbaren Randbereich eines ersten Bildblocks liegen und Bildpunkten zugeordneten Helligkeitswerten, die in einem vorgebbaren Randbereich eines weiteren, zweiten Bildblocks liegen, ermittelt (Schritt 110, Fig. 1b).

In den gleichen Randbereichen werden auch zweite Differenzwerte für die Farbinformation, die den Bildpunkten zugeordnet sind, gebildet.

Ist mindestens ein erster Differenzwert und/oder ein zweiter Differenzwert größer als ein erster Schwellenwert bzw. als ein zweiter Schwellenwert, was in einem Überprüfungsschritt 111 überprüft wird, so wird die Nummer des Makroblocks gespeichert, in dem sich der erste Bildblock befindet (Schritt 112).

Das Verfahren wird für alle Bildblöcke des Bildobjekts 404 durchgeführt (Schritt 113).

Sind alle Bildblöcke berücksichtigt, so wird die Bitposition des gespeicherten Makroblocks mit niedrigster Nummer lokalisiert (Schritt 114).

Ferner werden auch dritte Differenzwerte von Formparametern, die Bildpunkten des ersten Bildblocks in dem Randbereich des ersten Bildblocks zugeordnet sind, mit Formparametern von Bildpunkten eines weiteren, zweiten Bildblocks gebildet (Schritt 120).

Ist mindestens ein dritter Differenzwert größer als der dritte Schwellenwert, was in einem Prüfschritt 121 überprüft wird, so wird die Nummer des Makroblocks gespeichert, in dem sich der erste Bildblock befindet (Schritt 122).

Dieses Verfahren wird für alle Bildblöcke des Bildes 400 durchgeführt (Schritt 123).

Abschließend wird die Bitposition des gespeicherten Makroblocks mit niedrigster Nummer lokalisiert (Schritt 124).

Der Decodierfehler kann nicht bei einem Bit hinter der Bitposition des gespeicherten Makroblocks mit niedrigster Nummer liegen.

Somit ist das Gebiet, in dem sich der Übertragungsfehler befindet, lokalisiert. Es beginnt bei dem Bit an der Bitposition des gespeicherten Makroblocks mit niedrigster Nummer und endet einen Makroblock später..

Ausgehend von der Lokalisierung des Übertragungsfehlers erfolgt eine Fehlerkorrektur, die in ihren Verfahrensschritten in Figur 6 dargestellt ist.

Das Gebiet, indem sich der Fehler befinden kann, ist demnach begrenzt von der Bitposition des gespeicherten Makroblocks mit niedrigster Nummer und der Bitposition, an dem der Übertragungsfehler von der Bilddecodierungseinheit 250 ermittelt wurde.

Ausgehend von der von der Bildcodierungseinheit 250 angegebenen Bitposition, an der der Übertragungsfehler erkannt wurde, wird jeweils iterativ ein Bitwert invertiert gegenüber dem empfangenen Bitwert (Schritt 601).

In einem weiteren Schritt wird die Bitposition um mindestens den Wert 1 erniedrigt (Schritt 602) und das Bildobjekt 404 wird in einem weiteren Schritt 603 unter Verwendung des invertierten Bitwerts decodiert (Schritt 603). Ist das Bildobjekt 404 fehlerfrei decodiert worden (Schritt 604), so wird das Bildobjekt angezeigt (Schritt 605). Es ist eine erfolgreiche Fehlerkorrektur gelungen.

Ist das Bildobjekt nicht fehlerfrei decodiert worden, so wird überprüft, ob schon die lokalisierte Bitposition des gespeicherten Makroblocks mit niedrigster Nummer erreicht ist (Schritt 606) und wenn dies der Fall ist, wird angegeben, daß keine Fehlerkorrektur mit diesem Verfahren möglich ist (Schritt 607). Es kann jedoch jede beliebige aufwendigere Art der Fehlerkorrektur oder Fehlerverschleierung im Anschluß an dieses Verfahren eingesetzt werden.

Ist der Anfang der Bitposition des gespeicherten Makroblocks mit niedrigster Nummer noch nicht erreicht, so wird wiederum ein Bit an der Position geändert, wobei das Bit der vorangegangenen Iteration wieder auf den decodierten Bitwert gesetzt wird.

Im Rahmen dieses Dokuments wurden folgende Veröffentlichungen zitiert:
[1] MPEG4 Video Verification Model Version 7.0. ISO-IEC/JTC1/SC29/WG11 N1642, MPEG 97 Bristol, April 1997
[2] B. Friedrichs, Kanalcodierung, Springer Verlag, ISBN 3-540-58232-0, Seite 193 bis 241, 1996

## Patentansprüche

1. Verfahren zur Fehlerlokalisierung eines Übertragungsfehlers, der bei der Decodierung eines codierten, eine beliebige Anzahl von Bits aufweisenden Bildes erkannt wurde, das mindestens ein Bildobjekt aufweist, wobei Bildpunkte des Bildes in Bildblöcke gruppiert sind und die Bildblöcke in Makroblöcke gruppiert sind, denen eine aufsteigende Numerierung entsprechend ihrer örtlichen Position innerhalb des Bildes zugeordnet ist,
- bei dem für jeden Bildpunkt, der nicht dem Bildobjekt zugeordnet ist und der in einem Bildblock liegt, in dem kein Bildpunkt dem Bildobjekt zugeordnet ist, die dem Makroblock zugeordnete Nummer gespeichert wird, in dem der Bildblock liegt,
- bei dem der Makroblock mit der niedrigsten Nummer ermittelt wird,
- bei dem die ermittelte Fehlerlokalisierung durch ein Gebiet gegeben ist ab einem Bit, mit dem der Makroblock in dem codierten Bild beginnt.

2. Verfahren nach Anspruch 1,
bei dem das Bild mehrere Bildobjekte aufweist.

3. Verfahren nach Anspruch 1 oder 2,
- bei dem erste Differenzwerte zwischen Bildpunkten zugeordneten Helligkeitswerten, die in einem vorgebbaren Randbereich eines ersten Bildblocks liegen, und Bildpunkten zugeordneten Helligkeitswerten, die in einem vorgebbaren Randbereich eines zweiten Bildblocks liegen, ermittelt werden, und
- bei dem die dem Makroblock zugeordnete Nummer gespeichert wird, in dem der erste Bildblock liegt, wenn mindestens einer der ersten Differenzwerte größer ist als ein vorgebbarer erster Schwellenwert.

4. Verfahren nach einem der Ansprüche 1 bis 3,
- bei dem zweite Differenzwerte zwischen Bildpunkten zugeordneten Farbwerten, die in einem vorgebbaren Randbereich eines ersten Bildblocks liegen, und Bildpunkten zugeordneten Farbwerten, die in einem vorgebbaren Randbereich eines zweiten Bildblocks liegen, ermittelt werden, und
- bei dem die dem Makroblock zugeordnete Nummer gespeichert wird, in dem der erste Bildblock liegt, wenn mindestens einer der zweiten Differenzwerte größer ist als ein vorgebbarer zweiter Schwellenwert.

5. Verfahren nach einem der Ansprüche 1 bis 4,
- bei dem dritte Differenzwerte zwischen Bildpunkten zugeordneten Formparametern, die in einem vorgebbaren Randbereich eines ersten Bildblocks liegen, und Bildpunkten zugeordneten Formparametern, die in einem vorgebbaren Randbereich eines zweiten Bildblocks liegen, ermittelt werden, und
- bei dem die dem Makroblock zugeordnete Nummer gespeichert wird, in dem der erste Bildblock liegt, wenn mindestens einer der dritten Differenzwerte größer ist als ein vorgebbarer dritter Schwellenwert.

6. Verfahren nach einem der Ansprüche 1 bis 5,
bei dem eine anschließende Fehlerkorrektur erfolgt, wobei in einem iterativen Verfahren folgende Schritte durchgeführt werden, solange bis das Gebiet korrekt decodiert wird:
- es wird jeweils ein decodierter Bitwert eines Bildpunkts in dem Gebiet invertiert,
- das Gebiet mit dem invertierten Bitwert wird decodiert.

7. Verfahren nach Anspruch 6,
bei dem die Fehlerkorrektur ausgehend von einer Bitposition, mit dem der Makroblock in dem codierten Bild beginnt , sukzessive bis zum Ende des Makroblocks.

8. Vorrichtung zur Fehlerlokalisierung eines Übertragungsfehlers, der bei der Decodierung eines codierten, eine beliebige Anzahl von Bits aufweisenden Bildes erkannt wurde, das mindestens ein Bildobjekt aufweist, wobei Bildpunkte des Bildes in Bildblöcke gruppiert sind und die Bildblöcke in Makroblöcke gruppiert sind, denen eine aufsteigende Numerierung entsprechend ihrer örtlichen Position innerhalb des Bildes zugeordnet ist,
mit einer Prozessoreinheit, die derart eingerichtet ist, daß
- für jeden Bildpunkt, der nicht dem Bildobjekt zugeordnet ist und der in einem Bildblock liegt, in dem kein Bildpunkt dem Bildobjekt zugeordnet ist, die dem Makroblock zugeordnete Nummer gespeichert wird, in dem der Bildblock liegt,
- der Makroblock mit der niedrigsten Nummer ermittelt wird,
- die ermittelte Fehlerlokalisierung durch ein Gebiet gegeben ist ab einem Bit, mit dem der Makroblock in dem codierten Bild beginnt.

9. Vorrichtung nach Anspruch 8,
bei dem das Bild mehrere Bildobjekte aufweist.

10. Vorrichtung nach Anspruch 8 oder 9,
bei der die Prozessoreinheit derart eingerichtet ist, daß
- erste Differenzwerte zwischen Bildpunkten zugeordneten Helligkeitswerten, die in einem vorgebbaren Randbereich eines ersten Bildblocks liegen, und Bildpunkten zugeordneten Helligkeitswerten, die in einem vorgebbaren Randbereich eines zweiten Bildblocks liegen, ermittelt werden, und
- die dem Makroblock zugeordnete Nummer gespeichert wird, in dem der erste Bildblock liegt, wenn mindestens einer der ersten Differenzwerte größer ist als ein vorgebbarer erster Schwellenwert.

11. Vorrichtung nach einem der Ansprüche 8 bis 10,
bei der die Prozessoreinheit derart eingerichtet ist, daß
- zweite Differenzwerte zwischen Bildpunkten zugeordneten Farbwerten, die in einem vorgebbaren Randbereich eines ersten Bildblocks liegen, und Bildpunkten zugeordneten Farbwerten, die in einem vorgebbaren Randbereich eines zweiten Bildblocks liegen, ermittelt werden, und
- die dem Makroblock zugeordnete Nummer gespeichert wird, in dem der erste Bildblock liegt, wenn mindestens einer der zweiten Differenzwerte größer ist als ein vorgebbarer zweiter Schwellenwert.

12. Vorrichtung nach einem der Ansprüche 8 bis 11,
bei der die Prozessoreinheit derart eingerichtet ist, daß
- dritte Differenzwerte zwischen Bildpunkten zugeordneten Formparametern, die in einem vorgebbaren Randbereich eines ersten Bildblocks liegen, und Bildpunkten zugeordneten Formparametern, die in einem vorgebbaren Randbereich eines zweiten Bildblocks liegen, ermittelt werden, und
- die dem Makroblock zugeordnete Nummer gespeichert wird, in dem der erste Bildblock liegt, wenn mindestens einer der dritten Differenzwerte größer ist als ein vorgebbarer dritter Schwellenwert.

13. Vorrichtung nach einem der Ansprüche 8 bis 12,
bei der die Prozessoreinheit derart eingerichtet ist, daß eine anschließende Fehlerkorrektur erfolgt, wobei in einem iterativen Verfahren folgende Schritte durchgeführt werden, solange bis das Gebiet korrekt decodiert wird:
- es wird jeweils ein decodierter Bitwert eines Bildpunkts in dem Gebiet invertiert,
- das Gebiet mit dem invertierten Bitwert wird decodiert.

14. Vorrichtung nach Anspruch 13,
bei der die Prozessoreinheit derart eingerichtet ist, daß die Fehlerkorrektur ausgehend von einer Bitposition mit dem der Makroblock in dem codierten Bild beginnt, sukzessive bis zum Ende des Makroblocks.

15. Bilddecodiereinheit mit einer Vorrichtung nach einem der Ansprüche 8 bis 14.
